# EUROPÄISCHE PATENTANMELDUNG

(11) **EP 2 380 940 A1**
(43) Veröffentlichungstag der Anmeldung: **26.10.2011**
(21) Anmeldenummer: 10160431.2
(22) Anmeldetag: 20.04.2010
(51) Int. Cl.: C09K 5/04

(54) **Absorptionswärmepumpe mit Sorptionsmittel umfassend Lithiumchlorid und ein organisches Chloridsalz**

(71) Anmelder: Evonik Degussa GmbH, 45128 Essen (DE)
(72) Erfinder: Seiler, Matthias, 64347, Griesheim (DE); Zehnacker, Olivier, 45657, Recklinghausen (DE); Schneider, Rolf, 63584, Gründau-Rothenbergen (DE); Schneider, Marc-Christoph, 64295, Darmstadt (DE)

(57) **Zusammenfassung**

Eine Absorptionswärmepumpe mit einem Sorptionsmittel, das Lithiumchlorid und mindestens ein Salz Q⁺Cl⁻ mit einem organischen Kation Q⁺ und dem gemeinsamen Anion Chlorid umfasst, wobei das organische Kation Q⁺ eine molare Masse von höchstens 200 g/mol aufweist, zeigt eine verbesserte Ausgasungsbreite des Arbeitsmediums aus Kältemittel und Sorptionsmittel.

## Beschreibung

Die Erfindung richtet sich auf eine Absorptionswärmepumpe mit verbesserter Ausgasungsbreite des Arbeitsmediums.

Klassische Wärmepumpen beruhen auf einem Kreislauf eines Kältemittels über einen Verdampfer und einen Kondensator. Im Verdampfer wird ein Kältemittel verdampft, wobei durch die vom Kältemittel aufgenommene Verdampfungswärme einem ersten Medium Wärme entzogen wird. Das verdampfte Kältemittel wird dann mit einem Kompressor auf einen höheren Druck gebracht und bei einer höheren Temperatur als bei der Verdampfung im Kondensator kondensiert, wobei die Verdampfungswärme wieder frei wird und auf einem höheren Temperaturniveau Wärme an ein zweites Medium abgegeben wird. Anschließend wird das verflüssigte Kältemittel wieder auf den Druck des Verdampfers entspannt.

Die klassischen Wärmepumpen haben den Nachteil, dass sie viel mechanische Energie für die Kompression des dampfförmigen Kältemittels verbrauchen. Absorptionswärmepumpen weisen demgegenüber einen verringerten Bedarf an mechanischer Energie auf. Absorptionswärmepumpen weisen zusätzlich zu dem Kältemittel, dem Verdampfer und dem Kondensator einer klassischen Wärmepumpe noch ein Sorptionsmittel, einen Absorber und einen Desorber auf. Im Absorber wird das verdampfte Kältemittel bei dem Druck der Verdampfung in dem Sorptionsmittel absorbiert und anschließend im Desorber bei dem höheren Druck der Kondensation durch Wärmezufuhr wieder aus dem Sorptionsmittel desorbiert. Die Verdichtung des flüssigen Arbeitsmediums aus Kältemittel und Sorptionsmittel erfordert weniger mechanische Energie als die Kompression des Kältemitteldampfs in einer klassischen Wärmepumpe, an Stelle des Verbrauchs an mechanischer Energie tritt die zur Desorption des Kältemittels eingesetzte Wärmeenergie.

Wie groß der zum Betrieb einer Absorptionswärmepumpe erforderliche Kreislauf an Sorptionsmittel über Absorber und Desorber ist, wird im Wesentlichen durch die Ausgasungsbreite des Arbeitsmedium der Absorptionswärmepumpe bestimmt, wobei unter Arbeitsmedium die Mischung aus Sorptionsmittel und Kältemittel im Kreislauf über Absorber und Desorber der Absorptionswärmepumpe verstanden wird und der Begriff Ausgasungsbreite den Unterschied des Gehalts an Kältemittel zwischen kältemittelarmem und kältemittelreichem Arbeitsmedium bezeichnet. Um kompakte und preiswerte Absorptionswärmepumpen bauen zu können besteht deshalb ein Bedarf nach Absorptionswärmepumpen mit einer hohen Ausgasungsbreite.

Ein großer Teil der technisch eingesetzten Absorptionswärmepumpen verwendet ein Arbeitsmedium, das Wasser als Kältemittel und Lithiumbromid als Sorptionsmittel enthält. Dieses Arbeitsmedium hat jedoch in vielen Anwendungen eine unbefriedigende Ausgasungsbreite, da bei einem Arbeitsmedium aus Wasser und Lithiumbromid eine Wasserkonzentration von 35 bis 40 Gew.-% im Arbeitsmedium nicht unterschritten werden darf, weil es sonst zur Kristallisation von Lithiumbromid und dadurch zu einer Verfestigung des Arbeitsmediums kommen kann.

Arbeitsmedien, die Wasser als Kältemittel und Lithiumchlorid als Sorptionsmittel enthalten, werden in Absorptionswärmepumpen technisch nicht eingesetzt, da bei solchen Arbeitsmedien in den meisten Anwendungen zur Vermeidung einer Kristallisation von Lithiumchlorid die Ausgasungsbreite noch wesentlich niedriger als bei Arbeitsmedien aus Wasser und Lithiumbromid gehalten werden muss.

WO 2005/113702 beschreibt Absorptionswärmepumpen, die ein Arbeitsmedium mit einer ionischen Flüssigkeit als Sorptionsmittel verwenden, wobei die ionische Flüssigkeit vorzugsweise mit dem Kältemittel unbegrenzt mischbar ist. Mit ionischen Flüssigkeit als Sorptionsmittel lässt sich zwar das Problem der Kristallisation des Sorptionsmittels vermeiden, doch wird in der Regel keine bessere Ausgasungsbreite im Vergleich zu Arbeitsmedien aus Wasser und Lithiumbromid erzielt, insbesondere nicht für Arbeitsmedien mit Wasser als Kältemittel.

WO 2006/134015 beschreibt in Beispiel VII a) die Verwendung der ionischen Flüssigkeiten 1-Ethyl-3-methylimidazoliummethylsulfonat, 1-Ethyl-3-methylimidazoliumacetat, sowie 1-Ethyl-3-methylimidazoliumhydroxid als Additive für ein Arbeitsmedium aus Lithiumbromid und Wasser, um die Kristallisationstemperatur des Sorptionsmittels herabzusetzen. Es wird jedoch nicht offenbart, welche Anteile an Wasser, Lithiumbromid und ionischer Flüssigkeit das Arbeitsmedium enthalten soll und es wird nichts zum Einfluss des Additivs auf die Ausgasungsbreite des Arbeitsmediums offenbart.

K.-S. Kim et al. schlagen in Korean J. Chem. Eng., 23 (2006) 113-116 Arbeitsmedien aus Wasser, Lithiumbromid und der ionischen Flüssigkeit 1-Butyl-3-methylimidazoliumbromid vor, die Lithiumbromid und die ionische Flüssigkeit in einem Gewichtsverhältnis von 4:1 und 7:1 enthalten. Die ionische Flüssigkeit wirkt in diesen Arbeitsmedien als Antikristallisationsadditiv, das die Löslichkeit von Lithiumbromid erhöht und die Kristallisationstemperatur absenkt. Den offenbarten Löslichkeiten, Viskositäten und Oberflächenspannungen lässt sich jedoch nichts zur Ausgasungsbreite der offenbarten Arbeitsmedien entnehmen.

Es wurde nun überraschend gefunden, dass sich durch die Verwendung eines Arbeitsmediums, das als Sorptionsmittel Lithiumchlorid und mindestens ein Salz Q⁺Cl⁻ mit einem organischen Kation Q⁺ mit einer molaren Masse von höchstens 200 g/mol und dem gemeinsamen Anion Chlorid umfasst, eine höhere Ausgasungsbreite des Arbeitsmediums erzielen lässt als mit Lithiumchlorid oder dem Salz Q⁺Cl⁻ allein.

Gegenstand der Erfindung ist deshalb eine Absorptionswärmepumpe umfassend einen Absorber, einen Desorber, einen Kondensator, einen Verdampfer, ein flüchtiges Kältemittel und ein Sorptionsmittel, das Lithiumchlorid und mindestens ein Salz Q⁺Cl⁻ mit einem organischen Kation Q⁺ und dem gemeinsamen Anion Chlorid umfasst, wobei das organische Kation Q⁺ eine molare Masse von höchstens 200 g/mol aufweist.

Die erfindungsgemäße Absorptionswärmepumpe umfasst einen Absorber, einen Desorber, einen Kondensator, einen Verdampfer, ein flüchtiges Kältemittel und ein Sorptionsmittel. Das Arbeitsmedium der Absorptionswärmepumpe ist eine Mischung aus Sorptionsmittel und Kältemittel. Im Betrieb der erfindungsgemäßen Absorptionswärmepumpe wird im Absorber dampfförmiges Kältemittel in kältemittelarmem Arbeitsmedium absorbiert unter Erhalt eines kältemittelreichen Arbeitsmediums und unter Freisetzung von Absorptionswärme. Aus dem so erhaltenen kältemittelreichen Arbeitsmedium wird im Desorber unter Wärmezufuhr Kältemittel dampfförmig desorbiert unter Erhalt von kältemittelarmem Arbeitsmedium, das in den Absorber zurückgeführt wird. Das im Desorber erhaltene dampfförmige Kältemittel wird im Kondensator unter Freisetzung von Kondensationswärme kondensiert, das erhaltene flüssige Kältemittel wird im Verdampfer unter Aufnahme von Verdampfungswärme verdampft und das dabei erhaltene dampfförmige Kältemittel wird in den Absorber zurückgeführt.

Der Begriff Absorptionswärmepumpe umfasst erfindungsgemäß alle Vorrichtungen, mit denen Wärme bei einem niedrigen Temperaturniveau aufgenommen und bei einem höheren Temperaturniveau wieder abgegeben wird und die durch Wärmezufuhr zum Desorber angetrieben werden. Die erfindungsgemäßen Absorptionswärmepumpen umfassen damit sowohl Absorptionskältemaschinen und Absorptionswärmepumpen im engeren Sinn, bei denen Absorber und Verdampfer bei einem geringeren Arbeitsdruck als Desorber und Kondensator betrieben werden, als auch Absorptionswärmetransformatoren, bei denen Absorber und Verdampfer bei einem höheren Arbeitsdruck als Desorber und Kondensator betrieben werden. In Absorptionskältemaschinen wird die Aufnahme von Verdampfungswärme im Verdampfer zur Kühlung eines Mediums genutzt. In Absorptionswärmepumpen im engeren Sinn wird die im Kondensator und/oder Absorber freigesetzte Wärme zum Heizen eines Mediums genutzt. In Absorptionswärmetransformatoren wird die im Absorber freigesetzte Absorptionswärme zum Heizen eines Mediums genutzt, wobei die Absorptionswärme auf einem höheren Temperaturniveau als bei der Zufuhr von Wärme zum Desorber erhalten wird. In einer bevorzugten Ausführungsform wird die Absorptionswärmepumpe als Absorptionskältemaschine betrieben und im Verdampfer wird Wärme aus einem zu kühlenden Medium aufgenommen.

Die erfindungsgemäße Absorptionswärmepumpe umfasst ein Sorptionsmittel, das Lithiumchlorid und mindestens ein Salz Q⁺Cl⁻ mit einem organischen Kation Q⁺ umfasst. Lithiumchlorid und das Salz Q⁺Cl⁻ haben dabei das Anion Chlorid gemeinsam. Der Anteil an Lithiumchlorid und Salz Q⁺Cl⁻ am Sorptionsmittel beträgt vorzugsweise mehr als 50 Gew.-% und besonders bevorzugt mehr als 80 Gew.-%. Das Sorptionsmittel kann neben Lithiumchlorid noch andere Lithiumsalze, wie zum Beispiel Lithiumbromid, Lithiumnitrat, Lithiumformiat, Lithiumacetat und Lithiumcarbonat enthalten. Vorzugsweise beträgt der Anteil an Lithiumchlorid an der Gesamtmenge an Lithiumsalzen mehr als 80 Gew.-%, besonders bevorzugt mehr als 90 Gew.-%.

Das Sorptionsmittel enthält vorzugsweise Lithiumchlorid und das Salz Q⁺Cl⁻ in einem molaren Verhältnis, für das der Schmelzpunkt der Mischung aus Lithiumchlorid und Salz Q⁺Cl⁻niedriger ist als die Schmelzpunkte der Komponenten Lithiumchlorid und Q⁺Cl⁻. Besonders bevorzugt enthält das Sorptionsmittel Lithiumchlorid und das Salz Q⁺Cl⁻ in einem molaren Verhältnis, das nicht mehr als 25 % vom molaren Verhältnis einer eutektischen Mischung aus Lithiumchlorid und Salz Q⁺Cl⁻ abweicht. Mit den bevorzugten molaren Verhältnissen von Lithiumchlorid und das Salz Q⁺Cl⁻ wird eine besonders große Ausgasungsbreite des Arbeitsmediums erreicht und das Arbeitsmedium kann in der Absorptionswärmepumpe in einem besonders großen Temperaturbereich eingesetzt werden.

Im Salz Q⁺Cl⁻ weist das organische Kation Q⁺ eine molare Masse von höchstens 200 g/mol und vorzugsweise von höchstens 165 g/mol auf. Die Verwendung von einem oder mehreren Salzen Q⁺Cl⁻, deren organisches Kation Q⁺ eine erfindungsgemäß niedrige molare Masse aufweist, ist wesentlich für die Erzielung einer großen Ausgasungsbreite des Arbeitsmediums.

Als organische Kationen eignen sich insbesondere Kationen der allgemeinen Formeln (I) bis (V):

R¹R²R³R⁴N⁺ (I)

R¹R²R³R⁴P⁺ (I)

R¹R²R³S⁺ (III)

R¹R²N⁺=C (NR³R⁴) (NR⁵R⁶) (IV)

R¹R²N⁺=C (NR³R⁴) (XR⁵) (V)

in denen

R¹, R², R³, R⁴, R⁵, R⁶ gleich oder unterschiedlich sind und Wasserstoff, einen linearen oder verzweigten aliphatischen oder olefinischen Kohlenwasserstoffrest, einen cycloaliphatischen oder cycloolefinischen Kohlenwasserstoffrest, einen aromatischen Kohlenwasserstoffrest, einen Alkylarylrest, einen endständig durch OH, OR', NH₂, N(H)R' oder N(R')₂ funktionalisierten linearen oder verzweigten aliphatischen oder olefinischen Kohlenwasserstoffrest oder einen Polyetherrest der Formel -(R⁷-O)ₙ-R⁸ bedeuten, wobei für Kationen der Formel (V) R⁵ nicht Wasserstoff ist,
R' ein aliphatischer oder olefinischer Kohlenwasserstoffrest ist,
R⁷ ein 2 oder 3 Kohlenstoffatome enthaltender linearer oder verzweigter Alkylenrest ist,
n von 1 bis 3 ist,
R⁸ Wasserstoff oder ein linearer oder verzweigter aliphatischer oder olefinischer Kohlenwasserstoffrest ist,
X ein Sauerstoffatom oder ein Schwefelatom ist, und
wobei mindestens einer und vorzugsweise jeder der Reste R¹, R², R³, R⁴, R⁵ und R⁶ von Wasserstoff verschieden ist.

Ebenso geeignet sind Kationen der Formeln (I) bis (V), in denen die Reste R¹ und R³ zusammen einen 4- bis 10-gliedrigen, vorzugsweise 5- bis 6-gliedrigen, Ring bilden.

Ebenfalls geeignet sind heteroaromatische Kationen mit mindestens einem quaternären Stickstoffatom im Ring, das einen wie oben definierten Rest R¹ trägt, vorzugsweise am Stickstoffatom substituierte Derivate von Pyrrol, Pyrazol, Imidazol, Oxazol, Isoxazol, Thiazol, Isothiazol, Pyridin, Pyrimidin, Pyrazin, Indol, Chinolin, Isochinolin, Cinnolin, Chinoxalin oder Phthalazin.

Vorzugsweise enthält das organische Kation Q⁺ ein quaternäres Stickstoffatom. Das organische Kation Q⁺ ist vorzugsweise ein 1,3-Dialkylimidazoliumion, 1,3-Dialkylimidazoliniumion, N-Alkylpyridiniumion, N,N-Dialkylpyrrolidiniumion oder ein Ammoniumion der Struktur R¹R²R³R⁴N⁺, wobei R¹, R² und R³ unabhängig voneinander Wasserstoff, Alkyl oder Hydroxyethyl sind und R⁴ ein Alkylrest ist.

Besonders bevorzugt ist das organische Kation Q⁺ ein 1,3-Dialkylimidazoliumion, wobei die Alkylgruppen unabhängig voneinander ausgewählt sind aus Methyl, Ethyl, n-Propyl und n-Butyl. Insbesondere bevorzugt ist das organische Kation Q⁺ 1,3-Dimethylimidazolium, 1-Ethyl-3-methylimidazolium, 1-(n-Butyl)-3-methylimidazolium oder 1-(n-Butyl)-3-ethylimidazolium.

In einer weiteren besonders bevorzugten Ausführungsform ist das Salz Q⁺Cl⁻ Cholinchlorid.

Das Salz Q⁺Cl⁻ ist vorzugsweise bis zu einer Temperatur von 150°C thermisch stabil. Vorzugsweise werden Salze Q⁺Cl⁻verwendet, die eine Löslichkeit in Wasser von mindestans 500 g/l zeigen. Bevorzugt werden Salze Q⁺Cl⁻ verwendet, die hydrolysestabil sind. Hydrolysestabile Salze Q⁺Cl⁻ zeigen in einer Mischung mit 50 Gew.-% Wasser bei einer Lagerung bei 80°C innerhalb von 8000 h weniger als 5 % Abbau durch Hydrolyse.

Das Sorptionsmittel kann neben dem Salz Q⁺Cl⁻ noch weitere Salze mit organischem Kation und anderen Anionen, wie zum Beispiel Bromid, Nitrat, Formiat, Acetat oder Carbonat enthalten. Vorzugsweise beträgt der Anteil von Chloridsalzen Q⁺Cl⁻ an der Gesamtmenge an organischen Salzen mehr als 80 Gew.-%, besonders bevorzugt mehr als 90 Gew.-%.

Die erfindungsgemäße Absorptionswärmepumpe enthält als Kältemittel vorzugsweise Wasser, Methanol, Ethanol, 2-Propanol, Trifluorethanol, Schwefeldioxid, Kohlendioxid oder Ammoniak, besonders bevorzugt Wasser, Ethanol, 2-Propanol oder Trifluorethanol und am meisten bevorzugt Wasser.

In einer bevorzugten Ausführungsform werden das Salz Q⁺Cl⁻und das Kältemittel so gewählt, dass eine bei 35 °C gesättigte Lösung von Lithiumchlorid im Kältemittel einen höheren Dampfdruck aufweist als eine Mischung aus dem Salz Q⁺Cl⁻ und dem Kältemittel mit gleichem Gewichtsanteil Kältemittel. Vorzugsweise wird Wasser, Methanol, Ethanol, 2-Propanol oder Trifluorethanol und besonders bevorzugt Wasser als Kältemittel verwendet. Beispiele für diese Ausführungsform sind 1-Ethyl-3-methylimidazoliumchlorid, Cholinchlorid oder Tetramethylammoniumchlorid als Salz Q⁺Cl und Wasser als Kältemittel. Durch eine entsprechende Auswahl von Salz Q⁺Cl⁻ und Kältemittel wird eine weiter verbesserte Ausgasungsbreite des Arbeitsmediums erreicht.

Die erfindungsgemäße Absorptionswärmepumpe kann im Arbeitsmedium zusätzlich zu Sorptionsmittel und Kältemittel noch Additive, vorzugsweise Korrosionsinhibitoren und/oder benetzungsfördernde Additive enthalten. Der Anteil an Korrosionsinhibitoren beträgt vorzugsweise 10 bis 50000 ppm, besonders bevorzugt 100 bis 10000 ppm, bezogen auf die Masse des Sorptionsmittels. Der Anteil an benetzungsfördernden Additiven beträgt vorzugsweise 10 bis 50000 ppm, besonders bevorzugt 100 bis 10000 ppm, bezogen auf die Masse des Sorptionsmittels.

Als Korrosionsinhibitoren können alle aus dem Stand der Technik als für die in der Absorptionswärmepumpe verwendeten Werkstoffe geeignet bekannten, nicht flüchtigen Korrosionsinhibitoren verwendet werden.

Als benetzungsförderndes Additiv werden vorzugsweise ein oder mehrere Tenside aus der Gruppe der nichtionischen Tenside, zwitterionischen Tenside und kationischen Tenside verwendet.

Geeignete nichtionische Tenside sind Alkylaminalkoxylate, Amidoamine, Alkanolamide, Alkylphosphinoxide, Alkyl-N-glucamide, Alkylglucoside, Gallensäuren, Alkylalkoxylate, Sorbitanester, Sorbitanesterethoxylate, Fettalkohole, Fettsäureethoxylate, Esterethoxylate und Polyethersiloxane.

Geeignete zwitterionischen Tenside sind Betaine, Alkylglycine, Sultaine, Amphopropionate, Amphoacetate, tertiäre Aminoxide und Silicobetaine.

Geeignete kationische Tenside sind quaternäre Ammoniumsalze mit einem oder zwei Substituenten mit 8 bis 20 Kohlenstoffatomen, insbesondere entsprechende Tetraalkylammoniumsalze, Alkylpyridiniumsalze, Esterquats, Diamidoaminquats, Imidazoliniumquats, Alkoxyalkylquats, Benzylquats und Silikonquats.

In einer bevorzugten Ausführungsform umfasst das benetzungsfördernde Additiv ein oder mehrere nichtionische Tenside der allgemeinen Formel R(OCH₂CHR')ₘOH mit m von 4 bis 40, worin R ein Alkylrest mit 8 bis 20 Kohlenstoffatomen, ein Alkylarylrest mit 8 bis 20 Kohlenstoffatomen oder ein Polypropylenoxidrest mit 3 bis 40 Propylenoxideinheiten ist und R' Methyl oder vorzugsweise Wasserstoff ist.

In einer weiteren bevorzugten Ausführungsform umfasst das benetzungsfördernde Additiv ein Polyether-Polysiloxan-Copolymer das mehr als 10 Gew.-% [Si(CH₃)₂O]-Einheiten und mehr als 10 Gew.-% [CH₂CHR-O]-Einheiten enthält, in denen R Wasserstoff oder Methyl ist. Besonders bevorzugt sind Polyether-Polysiloxan-Copolymere der allgemeinen Formeln (VI) bis (VIII):

(CH₃)₃Si-O-[SiR¹(CH₃)-O]ₙ-Si(CH₃)₃ (VI)

R²O-Aₚ-[B-A]ₘ-A_{q}-R² (VII)

R²O-[A-Z]ₚ-[B-Si(CH₃)₂-Z-O-A-Z]ₘ-B-Si(CH₃)₂[Z-O-A]_{q}O_{1-q}R² (VIII)

worin
A ein zweiwertiger Rest der Formel -[CH₂CHR³-O]ᵣ- ist,
B ein zweiwertiger Rest der Formel -[Si(CH₃)₂-O]ₛ- ist,
Z ein zweiwertiger linearer oder verzweigter Alkylenrest mit 2 bis 20 Kohlenstoffatomen und vorzugsweise -(CH₂)₃-ist,
n = 1 bis 30 ist,
m = 2 bis 100 ist,
p, q = 0 oder 1 ist,
r = 2 bis 100 ist,
s = 2 bis 100 ist,
von 1 bis 5 der Reste R¹ Reste der allgemeinen Formel -Z-O-A-R² sind und die restlichen Reste R¹ Methyl sind,
R² Wasserstoff oder ein aliphatischer oder olefinischer Alkylrest oder Acylrest mit 1 bis 20 Kohlenstoffatomen ist und
R³ Wasserstoff oder Methyl ist.

Die benetzungsfördernden Additive sind dem Fachmann aus dem Stand der Technik als Additive für wässrige Lösungen bekannt und können nach aus dem Stand der Technik bekannten Verfahren hergestellt werden.

In einer bevorzugten Ausführungsform der erfindungsgemäßen Absorptionswärmepumpe werden im Absorber und/oder Desorber die Kältemittel enthaltende Dampfphase und die Sorptionsmittel enthaltende Flüssigphase durch eine semipermeable Membran voneinander getrennt, wobei die semipermeable Membran für das Kältemittel durchlässig und für das Sorptionsmittel undurchlässig ist.

Vorzugsweise ist die semipermeable Membran eine Lösungs-Diffusions-Membran. Eine Lösungs-Diffusions-Membran weist praktisch keine Poren auf. Die selektive Durchlässigkeit der Membran für das Kältemittel beruht bei einer Lösungs-Diffusions-Membran darauf, dass sich das Kältemittel im Material der Membran löst und durch die Membran hindurch diffundiert, während das Sorptionsmittel im Material der Membran unlöslich ist. Die Eignung einer Lösungs-Diffusions-Membran für die erfindungsgemäße Absorptionswärmepumpe kann der Fachmann deshalb durch einfache Versuche zur Löslichkeit von Kältemittel und Sorptionsmittel im Material der Membran ermitteln.

Für die Ausführungsform mit Wasser als Kältemittel kann als Lösungs-Diffusions-Membran jede porenfreie Membran verwendet werden, die dem Fachmann als zur Entsalzung von wässrigen Salzlösungen geeignet aus den technischen Gebieten der Dialyse, der Umkehrosmose und der Pervaporation bekannt ist.

Vorzugsweise wird als Material für die LösungsDiffusionsmembranen ein hydrophiles oder hydrophil funktionalisiertes Polymer verwendet, das Polyvinylalkohol, Polyimid, Polybenzimidazol, Polybenzimidazolon, Polyamidhydrazid, Zelluloseester, Zelluloseacetat, Zellulosediacetat, Zellulosetriacetat, Zellulosebutyrat, Zellulosenitrat, Polyharnstoff, Polyfuran, Polyethylenglykol, Poly-(Octyl-Methylsiloxan), Polysiloxan, Poly-Alkyl-Siloxan, Polydialkylsiloxan, Polyester-Polyether-Blockcopolymer, Polysulfon, sulfoniertes Polysulfon, Polyamid, insbesondere aromatisches Polyamid, Polyether, Polyetheretherketon, Polyester, Polyether-Harnstoff-Komposit, Polyamid-Harnstoff-Komposit, Polyethersulfon, Polycarbonat, Polymethylmethacrylat, Polyacrylsäure oder Polyacrylnitril enthält. Ebenso können auch Mischungen oder Copolymere von zwei oder mehr dieser Polymeren eingesetzt werden. Besonders bevorzugt sind Lösungs-Diffusions-Membranen aus Zelluloseacetat, quervernetztem Polyethylenglykol, quervernetztem Polydimethylsiloxan oder einem Polyester-Polyether-Blockcopolymer.

In einer weiteren bevorzugten Ausführungsform ist die semipermeable Membran eine mikroporöse Membran. Mikroporöse Membranen im Sinne der Erfindung sind Membranen, die durch die Membran reichende Poren mit einem kleinsten Durchmesser im Bereich von 0,3 nm bis 100 µm aufweisen. Vorzugsweise weist die Membran Poren im Bereich von 0,3 nm bis 0,1 µm auf.

Vorzugsweise wird eine mikroporöse Membran verwendet, die vom Arbeitsmedium aus Sorptionsmittel und Kältemittel nicht benetzt wird. Der Begriff Benetzen steht dabei für einen Kontaktwinkel zwischen Arbeitsmedium und mikroporöser Membran von weniger als 90 Grad, der zu einem Eindringen von Arbeitsmedium in Poren der Membran durch Kapillarkräfte führt. Vorzugsweise beträgt der Kontaktwinkel zwischen Arbeitsmedium und mikroporöser Membran mehr als 120 Grad, besonders bevorzugt mehr als 140 Grad. Durch die Verwendung einer nicht benetzenden mikroporösen Membran kann auch bei einem gegenüber der Dampfseite erhöhten Druck auf der Seite des flüssigen Arbeitsmediums ein Fluss des flüssigen Arbeitsmediums durch die Poren der Membran auf die Dampfseite der Membran verhindert werden. Die Eignung einer mikroporösen Membran für die erfindungsgemäße Absorptionswärmepumpe kann der Fachmann deshalb durch die Bestimmung des Kontaktwinkels zwischen dem Arbeitsmedium und der Membran ermitteln.

Für die Ausführungsform mit Wasser als Kältemittel wird vorzugsweise als semipermeable Membran eine hydrophobe mikroporöse Membran verwendet. Geeignete hydrophobe mikroporöse Membranen sind dem Fachmann auf dem technischen Gebiet der Funktionsbekleidung als wasserdichte und wasserdampfdurchlässige Membranen bekannt.

Vorzugsweise werden hydrophobe mikroporöse Membranen aus Polyethylen, Polypropylen, Polytetrafluorethylen, Polyvinylidenfluorid oder fluoralkylmodifizierten Polymeren verwendet. Ebenso können auch Mischungen oder Copolymere von zwei oder mehr dieser Polymeren eingesetzt werden. Ebenfalls geeignet sind anorganische hydrophobe mikroporöse Membranen oder Kompositmembranen mit einem anorganischen hydrophoben mikroporösen Material, beispielsweise Membranen, deren Poren durch Silicalit oder hydrophobierte Kieselsäure gebildet werden.

Vorzugsweise ist die semipermeable Membran auf einer porösen Stützschicht angeordnet. Durch die Anordnung auf einer porösen Stützschicht kann eine mechanisch stabile Membraneinheit auch mit einer dünnen semipermeablen Membran erreicht werden. Dies ermöglicht einen rascheren Stofftransport durch die Membran und damit eine kleinere und kompaktere Ausführung des Absorbers. Vorzugsweise wird die Stützschicht auf der an die Dampfphase angrenzenden Seite der semipermeablen Membran angeordnet. Eine solche Anordnung der Stützschicht führt zu einem geringeren Stofftransportwiderstand als eine Anordnung der Stützschicht auf der dem flüssigen Arbeitsmedium zugewandten Seite der Membran.

Die poröse Stützschicht kann sowohl aus anorganischen als auch aus organischen Materialien bestehen. Vorzugsweise wird die Membran auf einer porösen Stützschicht aus einem hydrophoben Polymer, insbesondere aus einem Polyolefin, einem Polyester oder Polyvinylidenfluorid, angeordnet. Die Stützschicht kann zusätzlich noch Verstärkungen, z.B. durch Gewebelagen, enthalten.

In einer bevorzugten Ausführungsform ist die semipermeable Membran in Form von Hohlfasern angeordnet. Die Ausführung der Membran in Form von Hohlfasern ermöglicht eine besonders kompakte Bauweise von Absorber und/oder Desorber und einen Betrieb mit einem höheren Druckunterschied zwischen der Dampfphase und der Flüssigphase.

Die erfindungsgemäße Absorptionswärmepumpe wird vorzugsweise zwei- oder mehrstufige und besonders bevorzugt zweistufig ausgeführt, wie beispielsweise für Absorptionskältemaschinen in F. Ziegler, R. Kahn, F. Summerer, G. Alefeld "Multi-Effect absorption chillers", Rev. Int. Froid 16 (1993) 301-311 beschrieben.

Die erfindungsgemäße Absorptionswärmepumpe weist vorzugsweise einen zusätzlichen Wärmetauscher auf, mit dem Wärme zwischen dem kältemittelarmen Arbeitsmedium, das vom Desorber dem Absorber zugeführt wird und dem kältemittelreichen Arbeitsmedium, das vom Absorber dem Desorber zugeführt wird, ausgetauscht wird. Besonders bevorzugt wird dazu ein Gegenstromwärmetauscher eingesetzt.

In einer bevorzugten Ausführungsform weist mindestens eines der Anlagenteile Absorber, Desorber, Kondensator und Verdampfer eine Wandfläche aus einem polymeren Werkstoff auf, über die Wärme mit der Umgebung ausgetauscht wird. Der polymere Werkstoff ist dabei bevorzugt ein Polyamid, ein Polyimid oder Polyetheretherketon. Als Polyamid wird bevorzugt Polyamid12 verwendet. Als Polyimid wird bevorzugt ein Polyimid aus Benzophenontetracarbonsäuredianhydrid und einer Mischung von Toluylendiisocyanat und Methylendiphenyldiisocyanat verwendet, das unter dem Handelsnamen P84 von Evonik Fibres erhältlich ist. Durch die Verwendung eines polymeren Werkstoffs lässt sich eine Korrosion der wärmeaustauschenden Flächen vermeiden. Durch die Verwendung eines Polyamids, eines Polyimids oder von Polyetheretherketon kann gleichzeitig ein hoher Wärmedurchgangskoeffizient erreicht werden, der eine kompakte Ausführung der Absorptionswärmepumpe ermöglicht.

Die nachfolgenden Beispiele verdeutlichen die Erfindung, ohne jedoch den Gegenstand der Erfindung zu beschränken.

### Beispiele

### Beispiele 1 bis 6

Ausgasungsbreite mit 1-Ethyl-3-methylimidazoliumchlorid (EMIMCl) als organischem Salz

Die maximal erreichbare Ausgasungsbreite wurde für den Betrieb einer Absorptionskältemaschine mit einem Druck in Verdampfer und Absorber von 10 mbar, einer Temperatur im Absorber von 35 °C, einem Druck in Desorber und Kondensator von 50 mbar und einer maximalen Temperatur im Desorber von 85 °C ermittelt. Dazu wurde das Sorptionsmittel mit unterschiedlichen Mengen an Wasser gemischt, jeweils der Dampfdruck gemessen und so der Gehalt an Wasser ermittelt, für den die Mischung aus Sorptionsmittel bei 35 °C einen Dampfdruck von 10 mbar, bzw. bei 85 °C einen Dampfdruck bei 50 mbar aufwies. Zusätzlich wurde der Mindestgehalt an Wasser ermittelt, für den bei 35 °C eine homogene Mischung ohne ungelöstes Lithiumsalz erhalten wird. Die Mischung mit einem Dampfdruck von 10 mbar bei 35 °C entspricht dem kältemittelreichsten Arbeitsmedium, das im Betrieb der Absorptionskältemaschine eingesetzt werden kann. Das kältemittelärmste Arbeitsmedium, das im Betrieb der Absorptionskältemaschine eingesetzt werden kann, ist die Mischung mit einem Dampfdruck von 50 mbar bei 85 °C oder, falls für eine solche Mischung bei 35 °C die Löslichkeitsgrenze von Lithiumsalz überschritten ist, die homogene Mischung mit dem Mindestgehalt an Wasser. Die Ausgasungsbreite berechnet sich als Differenz des Massenanteils an Kältemittel Wasser zwischen dem kältemittelreichsten Arbeitsmedium und dem kältemittelärmsten Arbeitsmedium. Die Ergebnisse sind in Tabelle 1 zusammengestellt.

Die Daten in Tabelle 1 zeigen, dass erfindungsgemäß mit einem Sorptionsmittel aus 1-Ethyl-3-methylimidazoliumchlorid und Lithiumchlorid eine höhere Ausgasungsbreite erzielt wird, als mit 1-Ethyl-3-methylimidazoliumchlorid bzw. Lithiumchlorid als Sorptionsmittel. Auch im Vergleich zu dem technisch verwendeten Sorptionsmittel Lithiumbromid wird eine verbesserte Ausgasungsbreite erzielt.

**Tabelle 1**

| Ausgasungsbreite von Sorptionsmitteln mit Wasser als Kältemittel | | | | | |
|---|---|---|---|---|---|
| Beispiel | Sorptionsmittel | Massenanteil Wasser für 10 mbar bei 35°C | Massenanteil Wasser für 50 mbar bei 85°C | Massenanteil Wasser für Löslichkeitsgrenze bei 35 °C | Ausgasungsbreite |
| 1* | LiCl | 0, 61 | *** | 0,53 | 0, 08 |
| 2* | EMIMCl | 0, 17 | 0,1 | | 0, 07 |
| 3 | EMIMCl/LiCl 1:1** | 0,45 | *** | 0,34 | 0,11 |
| 4 | EMIMCl/LiCl 2:1** | 0,37 | *** | 0,24 | 0,13 |
| 5 | EMIMCl/LiCl 3:1** | 0,35 | 0,2 | 0,03 | 0,15 |
| 6* | LiBr | 0,45 | 0,34 | 0,34 | 0,11 |

| | | | | | |
|---|---|---|---|---|---|
| * nicht erfindungsgemäß ** Gewichtsverhältnis EMIMCl zu LiCl *** Für homogene Mischungen aus Sorptionsmittel und Wasser ist bei 85 °C der Dampfdruck stets höher als 50 mbar | | | | | |

### Beispiele 7 bis 11

### Dampfdruck von Arbeitsmedien mit Wasser als Kältemittel

Für Arbeitsmedien, die als Sorptionsmittel ein organisches Salz und Lithiumchlorid im Massenverhältnis von 3:1 und als Kältemittel Wasser mit einem Massenanteil von 10 bzw. 40 Gew.-% enthielten, wurde der Dampfdruck bei 35, 50 und 60 °C bestimmt. Für Mischungen, die ungelöstes Lithiumsalz enthielten, wurde kein Dampfdruck bestimmt. Die Ergebnisse sind in Tabelle 2 zusammengestellt.

Die Versuchsdaten zeigen, dass bei einer Kombination von Lithiumchlorid und einem organischen Salz mit einem anderen Anion als Chlorid bei niedrigen Gehalten an Wasser im Arbeitsmedium von 10 Gew.-% ein ungelöstes Lithiumsalz vorliegt, während bei Kombination von Lithiumchlorid mit einem organischen Salz mit dem gemeinsamen Anion Chlorid überraschenderweise auch bei solch niedrigen Gehalten an Wasser ein einphasiges flüssiges Arbeitsmedium erhalten wird. Darüber hinaus wird mit den erfindungsgemäßen Sorptionsmitteln auch bei höheren Gehalten an Wasser von 40 Gew.-% ein niedrigerer Dampfdruck erreicht, was für eine zweistufige Absorptionswärmepumpe von Vorteil ist und einen dreistufigen Betrieb einer Absorptionswärmepumpe ermöglicht.

**Tabelle 2**

| Dampfdruck von Arbeitsmedien mit Sorptionsmittel aus organischem Salz und Lithiumchlorid im Massenverhältnis von 3:1 und Wasser als Kältemittel | | | | | |
|---|---|---|---|---|---|
| Beispiel | Organisches Salz | Wasseranteil in Gew.-% | Dampfdruck in mbar bei | | |
| | | | 35 °C | 50 °C | 60 °C |
| 5 | EMIM Cl | 10 | 2,7 | 3,3 | 3,6 |
| | | 40 | 18 | 46 | 65 |
| 7 | BMIM Cl | 10 | 2 | 4 | 9 |
| 8 | Cholinchlorid | 10 | < 3 | 4 | 8 |
| | | 40 | 18 | 48 | 79 |
| 9* | EMIM CF₃COO | 10 | ** | ** | 28 |
| | | 40 | 29 | 65 | 109 |
| 10* | EMIM SCN | 10 | ** | ** | ** |
| | | 40 | ** | ** | ** |
| 11* | EMIM CH₃COO | 10 | ** | ** | ** |
| | | 40 | 26 | 54 | 90 |

| | | | | | |
|---|---|---|---|---|---|
| * nicht erfindungsgemäß ** ungelöstes Lithiumsalz BMIM = 1-Butyl-3-methylimidazolium | | | | | |

## Patentansprüche

1. Absorptionswärmepumpe umfassend einen Absorber, einen Desorber, einen Kondensator, einen Verdampfer, ein flüchtiges Kältemittel und ein Sorptionsmittel, **dadurch gekennzeichnet,**
**dass** das Sorptionsmittel Lithiumchlorid und mindestens ein Salz Q⁺Cl⁻ mit einem organischen Kation Q⁺ und dem gemeinsamen Anion Chlorid umfasst, wobei das organische Kation Q⁺ eine molare Masse von höchstens 200 g/mol aufweist.

2. Absorptionswärmepumpe nach Anspruch 1,
**dadurch gekennzeichnet,**
**dass** das Sorptionsmittel Lithiumchlorid und das Salz Q⁺Cl⁻ in einem molaren Verhältnis enthält, für das der Schmelzpunkt der Mischung aus Lithiumchlorid und Salz Q⁺Cl⁻ niedriger ist als die Schmelzpunkte der Komponenten Lithiumchlorid und Q⁺Cl⁻.

3. Absorptionswärmepumpe nach Anspruch 2,
**dadurch gekennzeichnet,**
**dass** das Sorptionsmittel Lithiumchlorid und das Salz Q⁺Cl⁻ in einem molaren Verhältnis enthält, das nicht mehr als 25 % vom molaren Verhältnis einer eutektischen Mischung aus Lithiumchlorid und Salz Q⁺Cl⁻ abweicht.

4. Absorptionswärmepumpe nach einem der Ansprüche 1 bis 3, **dadurch gekennzeichnet,**
**dass** der Anteil an Lithiumchlorid und Salz Q⁺Cl⁻ am Sorptionsmittel mehr als 50 Gew.-% beträgt.

5. Absorptionswärmepumpe nach einem der Ansprüche 1 bis 4, **dadurch gekennzeichnet,**
**dass** das Kältemittel ausgewählt ist aus Wasser, Methanol, Ethanol, 2-Propanol, Trifluorethanol, Schwefeldioxid, Kohlendioxid und Ammoniak.

6. Absorptionswärmepumpe nach Anspruch 5,
**dadurch gekennzeichnet,**
**dass** das Kältemittel Wasser ist.

7. Absorptionswärmepumpe nach einem der Ansprüche 1 bis 6, **dadurch gekennzeichnet,**
**dass** eine bei 35 °C gesättigte Lösung von Lithiumchlorid im Kältemittel einen höheren Dampfdruck aufweist als eine Mischung aus dem Salz Q⁺Cl⁻ und dem Kältemittel mit gleichem Gewichtsanteil Kältemittel.

8. Absorptionswärmepumpe nach einem der Ansprüche 1 bis 7, **dadurch gekennzeichnet,**
**dass** das organische Kation Q⁺ ausgewählt ist aus 1,3-Dialkylimidazoliumionen, 1,3-Dialkylimidazoliniumionen, N-Alkylpyridiniumionen, N,N-Dialkylpyrrolidiniumionen und Ammoniumionen der Struktur R¹R²R³R⁴N⁺, wobei R¹, R² und R³ unabhängig voneinander Wasserstoff, Alkyl oder Hydroxyethyl sind und R⁴ ein Alkylrest ist.

9. Absorptionswärmepumpe nach einem der Ansprüche 1 bis 8, **dadurch gekennzeichnet,**
**dass** sie als Absorptionskältemaschine betrieben wird und im Verdampfer Wärme aus einem zu kühlenden Medium aufgenommen wird.

10. Absorptionswärmepumpe nach einem der Ansprüche 1 bis 9, **dadurch gekennzeichnet,**
**dass** sie zweistufig ausgeführt ist.

11. Absorptionswärmepumpe nach einem der Ansprüche 1 bis 10, **dadurch gekennzeichnet,**
**dass** im Absorber und/oder Desorber eine Dampfphase enthaltend Kältemittel und eine Flüssigphase enthaltend Sorptionsmittel durch eine semipermeable Membran voneinander getrennt sind und die semipermeable Membran für das Kältemittel durchlässig und für das Sorptionsmittel undurchlässig ist.

12. Absorptionswärmepumpe nach einem der Ansprüche 1 bis 11, **dadurch gekennzeichnet,**
**dass** mindestens eines der Teile Absorber, Desorber, Kondensator und Verdampfer eine Wandfläche aus einem polymeren Werkstoff ausgewählt aus Polyamiden, Polyimiden und Polyetheretherketon aufweist, über die Wärme mit der Umgebung ausgetauscht wird.
